(19) Europäisches Patentamt
European Patent Office
Office européen des brevets

(11) **EP 4 636 866 A1**

(12) **EUROPEAN PATENT APPLICATION**
published in accordance with Art. 153(4) EPC

(43) Date of publication:
**22.10.2025 Bulletin 2025/43**

(51) International Patent Classification (IPC):
*H01M 4/525* (2010.01)

(21) Application number: 23926768.5

(52) Cooperative Patent Classification (CPC):
**H01M 4/525**

(22) Date of filing: **15.03.2023**

(86) International application number:
**PCT/CN2023/081646**

(87) International publication number:
**WO 2024/187412 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
• **MENG, Zhen**
**Ningde, Fujian 352100 (CN)**

• **WEI, Guanjie**
**Ningde, Fujian 352100 (CN)**
• **GU, Li**
**Ningde, Fujian 352100 (CN)**
• **SONG, Yuqian**
**Ningde, Fujian 352100 (CN)**
• **ZHANG, Yu**
**Ningde, Fujian 352100 (CN)**
• **ZHAO, Yanjie**
**Ningde, Fujian 352100 (CN)**

(74) Representative: **Gong, Jinping**
**CocreateIP**
**Neumarkter Straße 21**
**81673 München (DE)**

(54) **POSITIVE ELECTRODE ACTIVE MATERIAL AND PREPARATION METHOD THEREFOR, AND POSITIVE ELECTRODE SHEET, BATTERY, AND ELECTRIC DEVICE**

(57) Provided in the present application are a positive electrode active material and a preparation method therefor, and a positive electrode sheet, a battery and an electric device. The positive electrode active material of the present application comprises $(1-a)LiNi_xM1_yM2_{(1-x-y-z)}Nb_zO_2 \cdot aLi_2MnO_3$, wherein M1 comprises one or two elements of Mn and Al; and M2 comprises one or more transition metal elements except Mn, Ni and Nb. The positive electrode active material of the present application can improve the cycling stability of a battery and the capacity of the battery after cycling.

5

FIG. 1

EP 4 636 866 A1

**Description**

TECHNICAL FIELD

This application relates to the technical field of lithium secondary batteries, and specifically to a positive electrode active material, a method for preparing the positive electrode active material, a positive electrode plate, a battery, and an electric device.

BACKGROUND

In recent years, with the increasing application range of lithium secondary batteries, they are widely used in energy storage power systems such as hydropower, thermal power, wind power, and solar power plants, as well as in various fields such as electric tools, electric bicycles, electric motorcycles, electric vehicles, military equipment, and aerospace. Due to the significant development of lithium secondary batteries, there is an urgent need to improve their cycling performance and capacity.

SUMMARY

In view of the above, purposes of this application are to provide a positive electrode active material, a method for preparing the positive electrode active material, a positive electrode plate, a battery, and an electric device. The positive electrode active material provided in this application improves the cycling stability of the battery and the battery capacity after cycling.

In order to achieve the purposes, according to a first aspect, this application provides a positive electrode active material, including $(1-a)LiNi_xM1_yM2_{(1-x-y-z)}Nb_zO_2 \cdot aLi_2MnO_3$, where

M1 includes one or more elements of Mn and Al;

M2 includes one or more transition metal elements except Mn, Ni, and Nb;

$0<a<1$; $0.6 \leq x<1$, $0 \leq y<0.4$, $0<z \leq 0.15$, and $0.6<x+y+z<l$.

Although conventional lithium-rich manganese-based positive electrode active materials have a high theoretical capacity, with the progress of battery charging and discharging cycles, some $Li_2MnO_3$ phases decompose, resulting in rapid fading of the battery capacity after cycling.

This application, by doping an appropriate amount of Nb and optionally doping M1 and M2 into the lithium-rich manganese-based positive electrode active material, improves the fragmentation of material particles, stabilizes the lattice structure of the material, and improves the cycling stability of the battery, thus suppressing the fading of the battery capacity after cycling, and improving the battery capacity after cycling. Moreover, this application further improves the battery capacity by increasing the content of Ni.

In any implementation, $4 \leq x/z \leq 14$, optionally $6 \leq x/z \leq 10$. In this way, the content ratio of Ni to Nb in the solid solution is beneficial for improving the cycling stability and capacity of the battery within a certain range, thus increasing the battery capacity after cycling.

In any implementation, $0.7 \leq x \leq 0.85$. In this way, the cycling stability and capacity of the battery are improved, thus increasing the battery capacity after cycling.

In any implementation, $0.05 \leq z \leq 0.15$, optionally $0.1 \leq z \leq 0.15$. In this way, the cycling stability and capacity of the battery are improved, thus increasing the battery capacity after cycling.

In any implementation, $0.05<a<0.6$, optionally $0.1 \leq a \leq 0.5$. In this way, the solid solution of the lithium-rich manganese-based positive electrode active material contains relatively stable layered $LiNi_xM1_yM2_{(1-x-y-z)}Nb_zO_2$ within a certain proportion range and $Li_2MnO_3$ with high lithium content and capacity, thus improving the cycling stability and capacity of the battery, and improving the battery capacity after cycling.

In any implementation, M2 includes one or more of Co, Mo, and Zr; optionally, M2 includes Co. In this way, doping M2 is beneficial for improving the cycling stability of batteries.

In any implementation, the positive electrode active material includes a polycrystalline material, and the particle size of primary particles of the polycrystalline material is greater than or equal to $0.1\mu m$ and less than or equal to $1.5\mu m$, optionally greater than $0.3\mu m$ and less than or equal to $1.5\mu m$, more optionally greater than or equal to $0.4\mu m$ and less than or equal to $1\mu m$. In this way, during the battery charging and discharging cycle, it can slow down the degree of material volume change, reduce the degree of fragmentation of particles, and thus improve the cycling stability of the battery.

In any implementation, the volume average particle size Dv50 of the positive electrode active material is $1-10\mu m$;

and/or

the specific surface area of the positive electrode active material is 0.2-2m$^2$/g; and/or

the tap density of the positive electrode active material is 1.5-2.5g/cm$^3$.

According to a second aspect, this application provides a method for preparing a positive electrode active material, including:

providing a solution containing a nickel source, the solution optionally further containing a source of M1 and/or a source of M2;

enabling the solution to react with an alkaline solution to obtain a precipitate; and

mixing the precipitate with a lithium source and a niobium source, and performing calcination to obtain a positive electrode active material,

where the positive electrode active material includes $(1-a)LiNi_xM1_yM2_{(1-x-y-z)}Nb_zO_2 \cdot aLi_2MnO_3$, whereM1, M2, a, x, y, and z are as defined in the first aspect of this application.

In this way, this application, by doping an appropriate amount of Nb and optionally doping M1 and M2, improves the fragmentation of material particles, stabilizes the lattice structure of the material, and improves the cycling stability of the battery, thus suppressing the fading of the battery capacity after cycling, and improving the battery capacity after cycling. Moreover, this application further improves the battery capacity by increasing the content of Ni. Besides, the method provided in this application is simple, efficient, safe, highly operable, and adaptable, making it suitable for large-scale production.

In any implementation, the molar ratio of nickel in the solution to niobium in the niobium source is 4-14, optionally 6-10.

In any implementation, the content of nickel in the solution is 0.1-1mol/L, optionally 0.2-0.8mol/L; and/or

the content of M1 in the solution is 0-0.9mol/L, optionally 0-0.7mol/L; and/or

the content of M2 in the solution is 0-0.3mol/L, optionally 0-0. 1mol/L.

In any implementation, the molar ratio of lithium in the lithium source to niobium in the niobium source is 7-32, optionally 10-22.

In any implementation, the alkaline solution includes sodium hydroxide and/or $NH_3 \cdot H_2O$; and/or

the calcination temperature is 700°C-800°C; and/or

the calcination time is 4-15h.

According to a third aspect, this application provides a positive electrode plate, including the positive electrode active material according to the first aspect of this application or the positive electrode active material prepared by adopting the method according to the second aspect of this application.

According to a fourth aspect, this application provides a battery, including the positive electrode active material according to the first aspect of this application, the positive electrode active material prepared by adopting the method according to the second aspect of this application, or the positive electrode plate according to the third aspect of this application.

In any implementation, the battery may include, but is not limited to, product forms of secondary battery, battery module, and battery pack.

According to a fifth aspect, this application provides an electric device, including the battery according to the fourth aspect of this application.

BRIEF DESCRIPTION OF THE DRAWINGS

FIG. 1 is a schematic diagram of a secondary battery according to an implementation of this application.

FIG. 2 is an exploded diagram of the secondary battery according to the implementation of this application in FIG. 1.

FIG. 3 is a schematic diagram of a battery module according to an implementation of this application.

FIG. 4 is a schematic diagram of a battery pack according to an implementation of this application.

FIG. 5 is an exploded diagram of the battery pack according to the implementation of this application in FIG. 4.

FIG. 6 is a schematic diagram of an electric device powered by a secondary battery according to an implementation of this application.

Description of reference signs:
1-battery pack; 2-upper box body; 3-lower box body; 4-battery module; 5-secondary battery; 51-case; 52-electrode assembly; 53-top cover assembly

DETAILED DESCRIPTION

Specific implementation of a positive electrode active material, a method for preparing the same, a positive electrode plate, a secondary battery, a battery module, a battery pack, and an electric device provided in this application will be described below in detail with appropriate reference to the accompanying drawings. But there may be situations where unnecessary detailed descriptions are omitted. For example, there may be situations where detailed descriptions of well-known matters or repeated explanations of the same structure are omitted. This is to avoid the following description becoming unnecessarily lengthy and to facilitate the understanding of those skilled in the art. In addition, the accompanying drawings and the following description are provided for those skilled in the art to fully understand this application and are not intended to limit the subject matters disclosed in the claims.

The "range" disclosed in this application is limited in the form of a lower limit and an upper limit. A given range is limited by selecting a lower limit and an upper limit, which define the boundaries of the specific range. The range limited in this way may include or exclude endpoint values, and may be combined freely, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise specified, the numerical range "a-b" represents a shortened representation of any combination of real numbers between a and b, where a and b are both real numbers. For example, the numerical range of "0-5" represents that all real numbers between "0-5" have been listed herein, and "0-5" is only a shortened representation of these numerical combinations. In addition, when a parameter is expressed as an integer $\geq 2$, it is equivalent to disclosing that the parameter is an integer such as 2, 3, 4, 5, 6, 7, 8, 9, 10, 11, or 12.

Unless otherwise specified, all implementations and optional implementations of this application may be combined to form a new technical solution.

Unless otherwise specified, all technical features and optional technical features of this application may be combined to form a new technical solution.

Unless otherwise specified, all steps of this application may be performed sequentially or randomly, preferably sequentially. For example, a method including steps (a) and (b) represents that the method may include sequentially performed steps (a) and (b), or sequentially performed steps (b) and (a). For example, mentioning that the method may further include step (c) represents that step (c) may be added to the method in any order. For example, the method may include steps (a), (b), and (c), or steps (a), (c), and (b), or steps (c), (a), and (b), etc.

Unless otherwise specified, the terms "including" and "containing" mentioned in this application refer to open or closed forms. For example, "including" and "containing" may indicate further including or containing other components not listed, or only including or containing components listed.

Unless otherwise specified, in this application, the term 'or' is inclusive. For example, the phrase "A or B" represents "A, B, or both A and B". More specifically, any of the following conditions satisfies condition "A or B": A is true (or exists) and B is false (or does not exist); A is false (or does not exists) and B is true (or exists); both A and B are true (or exist).

Unless otherwise specified, in this application, the term "solid solution" refers to a homogeneous mixture of multiple crystalline solids that share a common lattice. Solid solution is typically composed of multiple atoms or molecules that share a lattice. In this application, $LiNi_xM1_yM2_{(1-x-y-z)}Nb_zO_2$ and $Li_2MnO_3$ share a common lattice structure.

Unless otherwise specified, in this application, the term 'volume average particle size Dv50' refers to the particle size that 50% of the volume is reached from the small particle size side in the volume-based particle size distribution.

[Secondary battery]

A secondary battery, also known as a rechargeable battery or storage battery, refers to a battery that can be continuously used by activating the active material through charging.

Normally, a secondary battery includes a positive electrode plate, a negative electrode plate, a separator, and electrolyte. In the process of battery charging and discharging, active ions (such as lithium ions) are intercalated and deintercalated back and forth between the positive electrode plate and the negative electrode plate. The separator is arranged between the positive electrode plate and the negative electrode plate, mainly to prevent short-circuiting between the positive electrode plate and the negative electrode plate, and to allow active ions to pass through. The electrolyte mainly plays a role in conducting active ions between the positive electrode plate and the negative electrode plate.

[Positive electrode active material]

An implementation of this application provides a positive electrode active material, including $(1-a)LiNi_xM1_yM2_{(1-x-y-z)}Nb_zO_2 \cdot aLi_2MnO_3$, where

M1 includes one or more elements of Mn and Al;

M2 includes one or more transition metal elements except Mn, Ni, and Nb;

a is usually greater than 0 and less than 1; x is usually greater than or equal to 0.6 and less than 1; y is usually greater than or equal to 0 and less than 0.4; z is usually greater than 0 and less than or equal to 0.15; the sum of x, y, and z is greater than 0.6 and less than or equal to 1.

It should be noted that in the composition formula of the positive electrode active material, for the sake of convenience, the atomic ratio of oxygen is recorded as 2 or 3, but it may also be a non-integral ratio. In addition, in the composition formula of the positive electrode active material, the molar ratio of elements is the feeding ratio during the manufacturing stage.

Although conventional lithium-rich manganese-based positive electrode active materials have a high theoretical capacity, with the progress of battery charging and discharging cycles, some $Li_2MnO_3$ phases decompose, resulting in rapid fading of the battery capacity after cycling.

Although the mechanism is not yet clear, the applicant unexpectedly discovered that: this application, by doping an appropriate amount of Nb and optionally doping M1 and M2, improves the fragmentation of the material, stabilizes the lattice structure of the material, and improves the cycling stability of the battery, thus suppressing the fading of the battery capacity after cycling, and improving the battery capacity after cycling. Moreover, this application further improves the battery capacity by increasing the content of Ni.

In some implementations, $4 \leq x/z \leq 14$, optionally $6 \leq x/z \leq 10$. For example, x/z may be 4, 4.5, 5, 5.5, 6, 6.4, 7, 7.6, 8, 8.4, 9, 9.6, 10, 10.5, 11, 11.4, 12, 12.3, 13, 13.5, 14, and any value in any range formed by the above numerical values. In this way, the content ratio of Ni to Nb in the solid solution is beneficial for improving the cycling stability and capacity of the battery within a certain range, thus increasing the battery capacity after cycling.

In some implementations, $0.7 \leq x \leq 0.85$. For example, it may be 0.7, 0.73, 0.8, 0.85, and any value of any range formed by the above numerical values. In this way, the cycling stability and capacity of the battery are improved, thus increasing the battery capacity after cycling.

In some implementations, $0.05 \leq z \leq 0.15$, optionally $0.1 \leq z \leq 0.15$. For example, it may be 0.05, 0.07, 0.1, 0.12, 0.15, and any value in any range formed by the above numerical values. In this way, the cycling stability and capacity of the battery are improved, thus increasing the battery capacity after cycling.

In some implementations, $0.05 < a < 0.6$, optionally $0.1 < a < 0.5$. For example, a may be 0.05, 0.1, 0.2, 0.3, 0.4, 0.5, 0.6, and any value in any range formed by the above numerical values. In this way, the solid solution of the lithium-rich manganese-based positive electrode active material contains relatively stable layered $LiNi_xM1_yM2_{(1-x-y-z)}Nb_zO_2$ within a certain proportion range and $Li_2MnO_3$ with high lithium content and capacity, thus improving the cycling stability and capacity of the battery, and improving the battery capacity after cycling.

In some implementations, the batteries in the market typically undergo aging after assembled, and after the batteries are aged, part of the layered $Li_2MnO_3$ phase may be transformed into a molten salt phase $LiMn_2O_4$ in the voltage range above 4.5V. In this case, in the composition analysis, $0 < a \leq 0.4$.

In some implementations, M2 includes one or more of Co, Mo, and Zr; optionally, M2 includes Co. In this way, doping M2 is beneficial for improving the cycling stability of batteries.

In some implementations, the positive electrode active material includes $(1-a)LiNi_xM1_yM2_{(1-x-y-z)}Nb_zO_2 \cdot aLi_2MnO_3$ where M1, M2, a, x, y, and z are as defined above in this application.

In some implementations, the volume average particle size Dv50 of the positive electrode active material is 1-10$\mu$m. For example, it may be 1$\mu$m, 2$\mu$m, 3$\mu$m, 4$\mu$m, 5$\mu$m, 6$\mu$m, 7$\mu$m, 8$\mu$m, 9$\mu$m, 10$\mu$m, and any value in any range formed by the above numerical values.

In some implementations, the volume average particle size Dv50 is tested using a Master sizer 3000 laser particle size analyzer according to the method in the national standard GB/T19077-2016.

In some implementations, the positive electrode active material includes a polycrystalline material, and the particle size of the primary particles of the polycrystalline material is greater than or equal to 0.1$\mu$m and less than or equal to 1.5$\mu$m, optionally greater than 0.3$\mu$m and less than or equal to 1.5$\mu$m, more optionally greater than or equal to 0.4$\mu$m and less than or equal to 1$\mu$m. For example, it may be 0.1$\mu$m, 0.2$\mu$m, 0.3$\mu$m, 0.4$\mu$m, 0.5$\mu$m, 0.6$\mu$m, 0.7$\mu$m, 0.8$\mu$m, 0.9$\mu$m, 1.0$\mu$m, 1.2$\mu$m, 1.3$\mu$m, 1.4$\mu$m, 1.5$\mu$m, and any value in any range formed by the above numerical values. In this way, during the battery charging and discharging cycle, it can slow down the degree of material volume change, reduce the degree of fragmentation of particles, and thus improve the cycling stability of the battery.

In some implementations, the particle size of the primary particles is tested using a Sigma 300 scanning electron microscope according to the method in JY/T010-1996.

In some implementations, the specific surface area of the positive electrode active material is 0.2-2m$^2$/g; and/or, the tap density of the positive electrode active material is 1.5-2.5g/cm$^3$.

In some implementations, the specific surface area of the positive electrode active material may be, for example, 0.2m$^2$/g, 0.5m$^2$/g, 0.8m$^2$/g, 1m$^2$/g, 1.2m$^2$/g, 1.5m$^2$/g, 1.7m$^2$/g, 1.9m$^2$/g, 2m$^2$/g, and any value in any range formed by the above numerical values.

In some implementations, the tap density of the positive electrode active material may be, for example, 1.5g/cm$^3$, 1.7g/cm$^3$, 1.8g/cm$^3$, 2.0g/cm$^3$, 2.1g/cm$^3$, 2.2g/cm$^3$, 2.4g/cm$^3$, 2.5g/cm$^3$, and any value in any range formed by the above numerical values.

In some implementations, the BET method may be used to measure the specific surface area of the positive electrode active material. For example, BEL Japan's BELSORP-mini II may be used to measure the specific surface area based on the nitrogen absorption at liquid nitrogen temperature (77K).

In some implementations, a general tap density measurement device may be used to measure the tap density of the positive electrode active material. For example, Logan's Tap-2S may be used to measure the tap density.

In some implementations, the interlayer spacing of the positive electrode active material is 0.45-0.50nm.

[Method for preparing positive electrode active material]

An implementation of this application provides a method for preparing a positive electrode active material, including:

providing a solution containing a nickel source, the solution optionally further containing a source of M1 and/or a source of M2;

enabling the solution to react with an alkaline solution to obtain a precipitate; and

mixing the precipitate with a lithium source and a niobium source, and performing calcination to obtain a positive electrode active material,

where the positive electrode active material includes (1-a)LiNi$_x$M1$_y$M2$_{(1-x-y-z)}$Nb$_z$O$_2$·aLi$_2$MnO$_3$, whereM1, M2, a, x, y, and z are as defined above in this application.

In this way, this application, by doping an appropriate amount of Nb into the lithium-rich manganese-based positive electrode material and optionally doping M1 and M2, improves the fragmentation of material particles, stabilizes the lattice structure of the material, and improves the cycling stability of the battery, thus suppressing the fading of the battery capacity after cycling, and improving the battery capacity after cycling. Moreover, this application further improves the battery capacity by increasing the content of Ni. Besides, the method provided in this application is simple, efficient, safe, highly operable, and adaptable, making it suitable for large-scale production.

In any implementation, the molar ratio of nickel in the solution to niobium in the niobium source is 4-14, optionally 6-10, for example, 4, 4.5, 5, 5.5, 6, 6.4, 7, 7.6, 8, 8.4, 9, 9.6, 10, 10.5, 11, 11.4, 12, 12.3, 13, 13.5, 14, and any value in any range formed by the above numerical values.

In some implementations, the content of nickel in the solution is 0.1-1mol/L, optionally 0.2-0.8mol/L, for example, 0.2mol/L, 0.3mol/L, 0.4mol/L, 0.5mol/L, 0.55mol/L, 0.6mol/L, 0.65mol/L, 0.7mol/L, 0.75mol/L, 0.8mol/L, 0.85mol/L, 0.9mol/L, 0.95mol/L, and any value in any range formed by the above numerical values; and/or

the content of M1 in the solution is 0-0.9mol/L, optionally 0-0.7mol/L, for example, 0.05mol/L, 0.1mol/L, 0.15mol/L, 0.2mol/L, 0.25mol/L, 0.3mol/L, 0.35mol/L, 0.4mol/L, 0.45mol/L, 0.5mol/L, 0.56mol/L, 0.6mol/L, 0.67mol/L, 0.7mol/L, 0.75mol/L, 0.8mol/L, and any value in any range formed by the above numerical values; and/or

the content of M2 in the solution is 0-0.3mol/L, optionally 0-0.1mol/L, for example, 0.005mol/L, 0.01mol/L, 0.02mol/L, 0.03mol/L, 0.04mol/L, 0.05mol/L, 0.06mol/L, 0.07mol/L, 0.08mol/L, 0.1mol/L, 0.13mol/L, 0.14mol/L, 0.16mol/L, 0.2mol/L, 0.22mol/L, 0.25mol/L, 0.27mol/L, 0.28mol/L, and any value in any range formed by the above numerical values.

In some implementations, the molar ratio of lithium in the lithium source to niobium in the niobium source is 7-32, optionally 10-22, for example, 7, 8, 9, 10, 11, 13, 15, 16, 18, 20, 21, 22, 24, 25, 26, 28, 29, 30, 31, 32, and any value in any range formed by the above numerical values.

In some implementations, the alkaline solution includes sodium hydroxide and/or $NH_3 \cdot H_2O$; and/or

the calcination temperature is 700-800°C, for example, 700°C, 720°C, 750°C, 780°C, 800°C, and any value in any range formed by the above numerical values; and/or

the calcination time is 4-15h, for example, 5h, 6h, 7h, 8h, 9h, 10h, 12h, 13h, 14h, 15h, and any value in any range formed by the above numerical values.

In some implementations, the nickel source, the source of M1, the source of M2, the lithium source, and the niobium source independently include but are not limited to nitrate, chloride, sulfate, nitrite, sulfite, hydroxide, and oxide.

In some implementations, the ratio of the molar amount of sodium hydroxide in the alkaline solution to the total molar amount of the nickel source, the source of M1, and the source of M2 in the solution is 0.95:1-20:1, for example, 1:1, 2:1, 4:1, 6:1, 8:1, 10:1, 12:1, 14:1, 16:1, 18:1, 19:1, and any value in any range formed by the above numerical values.

In some implementations, the ratio of the molar amount of ammonia water (calculated as $NH_3 \cdot H_2O$) in the alkaline solution to the total molar amount of the nickel source, the source of M1, and the source of M2 in the solution is 0.56:1-11.8:1, for example, 0.7:1, 1:1, 2:1, 4:1, 6:1, 8:1, 10:1, 11:1, and any value in any range formed by the above numerical values.

In some implementations, the volume ratio of the solution to the alkaline solution is 1:1-2:1, for example, 1.2:1, 1.6:1, 1.8:1, 2:1, and any value in any range formed by the above numerical values.

[Positive electrode plate]

A positive electrode plate usually includes a positive electrode current collector and a positive electrode film layer arranged on at least one surface of the positive electrode current collector. The positive electrode film layer includes the positive electrode active material described above or the positive electrode active material prepared by adopting the method described above.

As an example, the positive electrode current collector has two surfaces facing each other in its own thickness direction, and the positive electrode film layer is arranged on any one or two of the two surfaces facing each other.

In some implementations, the positive electrode current collector may be a metal foil or composite current collector. For example, as the metal foil, an aluminum foil may be used. The composite current collector may include a polymer material substrate and a metal layer formed on at least one surface of the polymer material substrate. The composite current collector may be formed by forming a metal material such as aluminum, aluminum alloy, nickel, nickel alloy, titanium, titanium alloy, silver, or silver alloy onto a polymer substrate such as a substrate of polypropylene (PP), polyethylene terephthalate (PET), polybutylene terephthalate (PBT), polystyrene (PS), or polyethylene (PE).

In some implementations, the positive electrode film layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some implementations, the positive electrode film layer may further optionally include a conductive agent. As an example, the conductive agent may include at least one of superconducting carbon, acetylene black, carbon black, Ketjen black, carbon dot, carbon nanotube, graphene, and carbon nanofiber.

In some implementations, the positive electrode plate may be prepared through the following steps: dispersing the components used for preparing the positive electrode plate, such as the positive electrode active material, the conductive agent, the binder and any other components, into a solvent, such as N-methylpyrrolidone, to form a positive electrode slurry; coating the positive electrode slurry onto the positive electrode current collector, and performing processes, such as drying and cold pressing, to obtain the positive electrode plate.

[Negative electrode plate]

The negative electrode plate includes a negative electrode current collector and a negative electrode film layer arranged on at least one surface of the negative electrode current collector. The negative electrode film layer includes a negative electrode active material.

As an example, the negative electrode current collector has two surfaces facing each other in its own thickness direction, and the negative electrode film layer is arranged on any one or two of the two surfaces facing each other.

In some implementations, the negative electrode current collector may be a metal foil or composite current collector. For example, as the metal foil, a copper foil may be used. The composite current collector may include a polymer material substrate and a metal layer formed on at least one surface of the polymer material substrate. The composite current collector may be formed by forming a metal material such as copper, copper alloy, nickel, nickel alloy, titanium, titanium alloy, silver, or silver alloy onto a polymer substrate such as a substrate of polypropylene (PP), polyethylene terephthalate (PET), polybutylene terephthalate (PBT), polystyrene (PS), or polyethylene (PE).

In some implementations, the negative electrode active material may be a negative electrode active material commonly known in the art for batteries. As an example, the negative electrode active material may include at least one of artificial graphite, natural graphite, soft carbon, hard carbon, silicon-based material, tin-based material, and lithium titanate. The silicon-based material may be at least one selected from the group consisting of elemental silicon, silicon oxide, silicon carbon composite, silicon nitrogen composite, and silicon alloy. The tin-based material may be any one selected from the group consisting of elemental tin, tin oxide, and tin alloy. However, these materials are not limited in this application, and other traditional materials that can be used as negative electrode active materials for batteries may also be used. These negative active materials may be used alone, or two or more thereof may be used jointly.

In some implementations, the negative electrode film layer may further optionally include a binder. As an example, the binder may be at least one selected from the group consisting of styrene butadiene rubber (SBR), polyacrylic acid (PAA), sodium polyacrylate (PAAS), polyacrylamide (PAM), polyvinyl alcohol (PVA), sodium alginate (SA), polymethylacrylic acid (PMAA), and carboxymethyl chitosan (CMCS).

In some implementations, the negative electrode film layer may further optionally include a conductive agent. As an example, the conductive agent may be at least one selected from the group consisting of superconducting carbon, acetylene black, carbon black, Ketjen black, carbon dot, carbon nanotube, graphene, and carbon nanofiber.

In some implementations, the negative electrode film layer may further optionally include other additives, for example, thickeners, such as carboxymethyl cellulose sodium (CMC-Na).

In some implementations, the negative electrode plate may be prepared through the following steps: dispersing the components used for preparing the negative electrode plate, such as the negative electrode active material, the conductive agent, the binder and any other components, into a solvent, such as N-methylpyrrolidone, to form a negative electrode slurry; coating the negative electrode slurry onto the negative electrode current collector, and performing processes, such as drying and cold pressing, to obtain the negative electrode plate.

[Electrolyte]

The electrolyte plays a role in conducting ions between the positive electrode plate and the negative electrode plate. The type of the electrolyte is not limited in this application, and may be selected according to the need. For example, the electrolyte may be liquid, gelled or all solid.

In some implementations, the electrolyte is liquid and includes an electrolyte salt and solvent.

In some implementations, the electrolyte salt may be at least one selected from the group consisting of lithium hexafluorophosphate, lithium tetrafluoroborate, lithium perchlorate, lithium hexafluoroarsenate, lithium difluorosulfonylimide, lithium bistrifluoromethanesulfonimide, lithium trifluoromethanesulfonate, lithium difluorophosphate, lithium difluorooxalate borate, lithium dioxalate borate, lithium difluorodioxalate phosphate, and lithium tetrafluorooxalate phosphate.

In some implementations, the solvent may be at least one selected from the group consisting of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluorinated ethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some implementations, the electrolyte may further optionally include additives. As an example, additives may include negative electrode film-forming additives, positive electrode film-forming additives, and additives that can improve certain performance of batteries, such as additives that improve overcharge performance of batteries, additives that improve high or low temperature performance of batteries, etc.

[Separator]

In some implementations, the secondary battery further includes a separator. The type of the separator is not limited in this application, and any known porous separator with good chemical and mechanical stability may be selected.

In some implementations, the material of the separator may be at least one selected from the group consisting of glass fiber, non-woven fabric, polyethylene, polypropylene, and polyvinylidene fluoride. The separator may be a single-layer thin film or a multi-layer composite thin film, which is not particularly limited herein. In a case that the separator is a multi-layer composite thin film, the materials of all layers may be the same or different, which are not particularly limited herein.

In some implementations, the positive electrode plate, the negative electrode plate, and the separator may be made into an electrode assembly through a process such as winding or laminating.

In some implementations, the secondary battery may further include an outer package. The outer package may be used to encapsulate the electrode assembly and electrolyte described above.

In some implementations, the outer package of the secondary battery may be a hard case, such as hard plastic case, aluminum case, or steel case. The outer package of the secondary battery may also be a flexible package, such as pouch type flexible package. The material of the flexible package may be plastic. Examples of plastic may include polypropylene, polybutylene terephthalate, and polybutylene succinate.

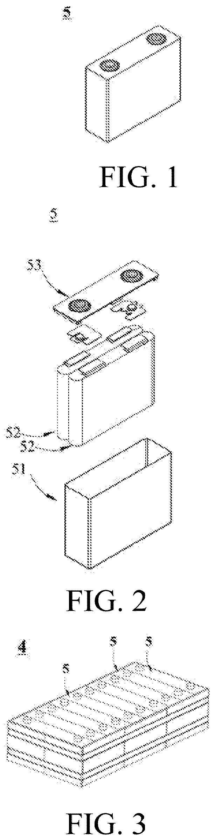

The shape of the secondary battery is not limited in this application, and may be a cylindrical shape, a square shape, or any other shape. For example, FIG. 1 illustrates a square secondary battery 5 as an example.

In some implementations, referring to FIG. 2, the outer package may include a case 51 and a cover plate 53. The case 51 may include a bottom plate and side plates connected to the bottom plate. The bottom plate and side plates enclose to form an accommodating cavity. The case 51 is provided with an opening communicated with the accommodating cavity. The cover plate 53 may cover the opening to seal the accommodating cavity. The positive electrode plate, the negative electrode plate, and the separator may be formed into an electrode assembly 52 through a process such as winding or laminating. The electrode assembly 52 is encapsulated within the accommodating cavity. The electrolyte infiltrates into the electrode assembly 52. The number of the electrode assembly 52 contained in the secondary battery 5 may be one or more. Those skilled in the art may select according to the specific practical need.

In some implementations, the secondary battery may be assembled into a battery module. The number of the secondary battery contained in the battery module may be one or more. The specific number may be selected by those skilled in the art according to the application and capacity of the battery module.

FIG. 3 illustrates a battery module 4 as an example. Referring to FIG. 3, in the battery module 4, multiple secondary batteries 5 may be arranged sequentially along the length direction of the battery module 4. Of course, the multiple secondary batteries may also be arranged in any other way. Further, the multiple secondary batteries 5 may be fixed by fasteners.

Optionally, the battery module 4 may further include a housing with an accommodating space. The multiple secondary batteries 5 are accommodated in the accommodating space.

In some implementations, the battery module may be assembled into a battery pack. The number of the battery module contained in the battery pack may be one or more. The specific number may be selected by those skilled in the art according to the application and capacity of the battery pack.

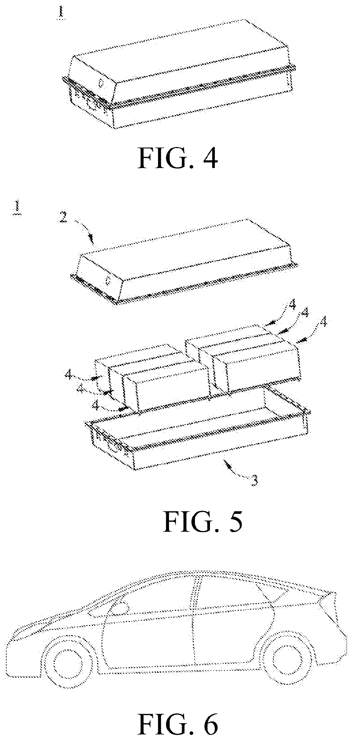

FIG. 4 and FIG. 5 illustrate a battery pack 1 as an example. Referring to FIG. 4 and FIG. 5, the battery pack 1 may include a battery box and multiple battery modules 4 arranged in the battery box. The battery box includes an upper box body 2 and a lower box body 3. The upper box body 2 may cover the lower box body 3 to form a closed space for accommodating the battery modules 4. Multiple battery modules 4 may be arranged in any way in the battery box.

In this application, the battery may include but is not limited to the secondary battery, the battery module, and the battery pack.

In addition, this application further provides an electric device including at least one of the secondary battery, the battery module, or the battery pack provided in this application. The secondary battery, the battery module, or the battery pack may be used as a power supply for the electric device, or as an energy storage unit for the electric device. The electric device may include, but not limited to, a mobile device (such as mobile phone, or laptop), an electric vehicle (such as pure electric vehicle, hybrid electric vehicle, plug-in hybrid electric vehicle, electric bicycle, electric scooter, electric golf cart, or electric truck), an electric train, a ship, a satellite, an energy storage system, etc.

As an electric device, the secondary battery, the battery module, or the battery pack may be selected according to the use need.

FIG. 6 illustrates an electric device as an example. The electrical device is a pure electric vehicle, a hybrid electric vehicle, or a plug-in hybrid electric vehicle. In order to meet the high power and energy density requirements on the secondary battery for the electric device, the battery pack or the battery module may be used.

[Examples]

The examples of this application will be described below. The examples described below are exemplary and are only used to explain this application, and should not be construed as limiting this application. If the specific technologies or conditions are not specified in the examples, follow the technologies or conditions described in the literature in the art or follow the product manual. The reagents or instruments used without specifying the manufacturer(s) are conventional products that are commercially available.

**Example 1**

1. Preparation of positive electrode active material: 0.235mol of manganese nitrate, 0.045mol of cobalt nitrate, and 0.63mol of nickel nitrate were dissolved in 1000ml of deionized water to obtain a solution; 500mL of 4M NaOH aqueous solution and 116mL of 10.2M $NH_3 \cdot H_2O$ aqueous solution were added to the solution, stirring was performed to obtain a precipitate, filtration was performed, the precipitate was collected, drying was performed at 110°C to constant weight to obtain a precursor material. The precursor material was all uniformly mixed with 1.1mol of LiOH and 0.045mol of $Nb_2O_5$, and calcination was performed at 750°C for 9h to obtain a Nb-doped high nickel-rich lithium positive electrode active material $0.9LiNi_{0.7}Mn_{0.15}Co_{0.05}Nb_{0.1}O_2 \cdot 0.1Li_2MnO_3$.

2. Preparation of positive electrode plate: the positive electrode active material, a conductive agent acetylene black, and a binder PVDF (polyvinylidene fluoride) were mixed according to a mass ratio of 8:1:1 by using N-methylpyrrolidone NMP as a solvent to form a slurry, then the slurry was coated onto an aluminum foil, drying was performed at 80°C for 12h, and the aluminum foil was rolled and punched into circular pieces with a diameter of 10mm as positive electrode plates.

3. Negative electrode plate: a metal lithium plate was used.

4. Separator: a PE separator was used.

5. Preparation of electrolyte: ethylene carbonate (EC) and dimethyl carbonate (DMC) were mixed according to a volume ratio of 1:1 to obtain a solution, and then LiPF6 was uniformly dissolved in the solution to obtain electrolyte. The concentration of LiPF6 in the electrolyte is 1mol/L.

6. Preparation of battery: the positive electrode plate, the separator, the negative electrode plate, and the electrolyte were assembled into a CR2032 button battery.

The methods for preparing the secondary battery in Examples 2-20 and Comparative Examples 1-5 were similar to that in Example 1, but the methods for preparing the positive electrode active material and product parameters were different. The differences between the methods for preparing the positive electrode active material and that in Example 1 were detailed in Table 1. The differences between the product parameters and those in Example 1 were detailed in Table 2.
Except for the parameters in Table 1, the method for preparing the positive electrode active material in Example 15 was the same as that in Example 13, except that 500mL of 4M NaOH aqueous solution were changed to 450mL and the calcination process was changed to be performed at 800°C for 10h.
Except for the parameters in Table 1, the method for preparing the positive electrode active material in Example 16 was the same as that in Example 11, except that 500mL of 4M NaOH aqueous solution were changed to 400mL and the calcination process was changed to be performed at 800°C for 10h.

Table 1: methods for preparing positive electrode active materials in Examples 1-20 and Comparative Examples 1-5

| | Positive electrode active material | Nickel nitrate (mol) | Manganese nitrate and/or aluminum nitrate (mol) | Cobalt nitrate, molybdenum nitrate or zirconium nitrate (mol) | LiOH (mol) | $Nb_2O_5$ (mol) | a | x | y | z |
|---|---|---|---|---|---|---|---|---|---|---|
| Example 1 | $0.9Li\text{-}Ni_{0.7}Mn_{0.15}Co_{0.05}Nb_{0.1}O_2 \cdot 0.1Li_2MnO_3$ | 0.63 | Manganese nitrate 0.235 | Cobalt nitrate 0.045 | 1.1 | 0.045 | 0.1 | 0.7 | 0.15 | 0.1 |
| Example 2 | $0.8Li\text{-}Ni_{0.7}Mn_{0.13}Co_{0.05}Nb_{0.1}O_2 \cdot 0.2Li_2MnO_3$ | 0.56 | Manganese nitrate 0.32 | Cobalt nitrate 0.04 | 1.2 | 0.04 | 0.2 | 0.7 | 0.15 | 0.1 |
| Example 3 | $0.5Li\text{-}Ni_{0.7}Mn_{0.15}Co_{0.05}Nb_{0.1}O_2 \cdot 0.5Li_2MnO_3$ | 0.35 | Manganese nitrate 0.575 | Cobalt nitrate 0.025 | 1.5 | 0.025 | 0.5 | 0.7 | 0.15 | 0.1 |
| Example 4 | $0.95Li\text{-}Ni_{0.7}Mn_{0.15}Co_{0.05}Nb_{0.1}O_2 \cdot 0.05Li_2MnO_3$ | 0.665 | Manganese nitrate 0.1925 | Cobalt nitrate 0.0475 | 1.05 | 0.0475 | 0.05 | 0.7 | 0.15 | 0.1 |
| Example 5 | $0.4Li\text{-}Ni_{0.7}Mn_{0.15}Co_{0.05}Nb_{0.1}O_2 \cdot 0.6Li_2MnO_3$ | 0.28 | Manganese nitrate 0.66 | Cobalt nitrate 0.02 | 1.6 | 0.02 | 0.6 | 0.7 | 0.15 | 0.1 |
| Example 6 | $0.9Li\text{-}Ni_{0.8}Mn_{0.05}Co_{0.05}Nb_{0.1}O_2 \cdot 0.1Li_2MnO_3$ | 0.72 | Manganese nitrate 0.145 | Cobalt nitrate 0.045 | 1.1 | 0.045 | 0.1 | 0.8 | 0.05 | 0.1 |
| Example 7 | $0.9Li\text{-}Ni_{0.6}Mn_{0.25}Co_{0.05}Nb_{0.1}O_2 \cdot 0.1Li_2MnO_3$ | 0.54 | Manganese nitrate 0.325 | Cobalt nitrate 0.045 | 1.1 | 0.045 | 0.1 | 0.6 | 0.25 | 0.1 |
| Example 8 | $0.9LiNi_{0.85}Co_{0.05}Nb_{0.1}O_2 \cdot 0.1Li_2MnO_3$ | 0.765 | Manganese nitrate 0.1 | Cobalt nitrate 0.045 | 1.1 | 0.045 | 0.1 | 0.85 | 0 | 0.1 |
| Example 9 | $0.9Li\text{-}Ni_{0.7}Mn_{0.13}Co_{0.05}Nb_{0.12}O_2 \cdot 0.1Li_2MnO_3$ | 0.63 | Manganese nitrate 0.217 | Cobalt nitrate 0.045 | 1.1 | 0.054 | 0.1 | 0.7 | 0.13 | 0.12 |
| Example 10 | $0.9Li\text{-}Ni_{0.7}Mn_{0.1}Co_{0.05}Nb_{0.15}O_2 \cdot 0.1Li_2MnO_3$ | 0.63 | Manganese nitrate 0.19 | Cobalt nitrate 0.045 | 1.1 | 0.0675 | 0.1 | 0.7 | 0.1 | 0.15 |

| | Positive electrode active material | Nickel nitrate (mol) | Manganese nitrate and/or aluminum nitrate (mol) | Cobalt nitrate, molybdenum nitrate or zirconium nitrate (mol) | LiOH (mol) | $Nb_2O_5$ (mol) | a | x | y | z |
|---|---|---|---|---|---|---|---|---|---|---|
| Examples 11 and 16 | $0.9Li\text{-}Ni_{0.7}Mn_{0.2}Co_{0.05}Nb_{0.05}O_2\cdot0.1Li_2MnO_3$ | 0.63 | Manganese nitrate 0.28 | Cobalt nitrate 0.045 | 1.1 | 0.0225 | 0.1 | 0.7 | 0.2 | 0.05 |
| Example 12 | $0.9Li\text{-}Ni_{0.65}Mn_{0.18}Co_{0.02}Nb_{0.15}O_2\cdot0.1Li_2MnO_3$ | 0.585 | Manganese nitrate 0.262 | Cobalt nitrate 0.018 | 1.1 | 0.0675 | 0.1 | 0.65 | 0.18 | 0.15 |
| Examples 13 and 15 | $0.9Li\text{-}Ni_{0.73}Mn_{0.15}Co_{0.05}Nb_{0.07}O_2\cdot0.1Li_2MnO_3$ | 0.657 | Manganese nitrate 0.235 | Cobalt nitrate 0.045 | 1.1 | 0.0315 | 0.1 | 0.73 | 0.15 | 0.07 |
| Example 14 | $0.9Li\text{-}Ni_{0.6}Mn_{0.15}Co_{0.1}Nb_{0.15}O_2\cdot0.1Li_2MnO_3$ | 0.54 | Manganese nitrate 0.235 | Cobalt nitrate 0.09 | 1.1 | 0.0675 | 0.1 | 0.6 | 0.15 | 0.15 |
| Example 17 | $0.9Li\text{-}Ni_{0.7}Al_{0.15}Co_{0.05}Nb_{0.1}O_2\cdot0.1Li_2MnO_3$ | 0.63 | Aluminum nitrate 0.135 + manganese nitrate 0.1 | Cobalt nitrate 0.045 | 1.1 | 0.045 | 0.1 | 0.7 | 0.15 | 0.1 |
| Example 18 | $0.9Li\text{-}Ni_{0.7}Mn_{0.19}Mo_{0.01}Nb_{0.1}O_2\cdot0.1Li_2MnO_3$ | 0.63 | Manganese nitrate 0.271 | Molybdenum nitrate 0.009 | 1.1 | 0.045 | 0.1 | 0.7 | 0.19 | 0.1 |
| Example 19 | $0.9Li\text{-}Ni_{0.5}Mn_{0.35}Co_{0.05}Nb_{0.1}O_2\cdot0.1Li_2MnO_3$ | 0.45 | Manganese nitrate 0.415 | Cobalt nitrate 0.045 | 1.1 | 0.045 | 0.1 | 0.5 | 0.35 | 0.1 |
| Example 20 | $0.9Li\text{-}Ni_{0.7}Mn_{0.15}Zr_{0.05}Nb_{0.1}O_2\cdot0.1Li_2MnO_3$ | 0.63 | Manganese nitrate 0.235 | Zirconium nitrate 0.045 | 1.1 | 0.045 | 0.1 | 0.7 | 0.15 | 0.1 |
| Comparative Example 1 | $0.9Li\text{-}Ni_{0.7}Mn_{0.25}Co_{0.05}O_2\cdot0.1Li_2MnO_3$ | 0.63 | Manganese nitrate 0.325 | Cobalt nitrate 0.045 | 1.1 | 0 | 0.1 | 0.7 | 0.25 | 0 |
| Comparative Example 2 | $LiNi_{0.7}Mn_{0.15}Co_{0.05}Nb_{0.1}O_2$ | 0.7 | Manganese nitrate 0.15 | Cobalt nitrate 0.05 | 1 | 0.05 | 0 | 0.7 | 0.15 | 0.1 |

(continued)

| | Positive electrode active material | Nickel nitrate (mol) | Manganese nitrate and/or aluminum nitrate (mol) | Cobalt nitrate, molybdenum nitrate or zirconium nitrate (mol) | LiOH (mol) | $Nb_2O_5$ (mol) | a | x | y | z |
|---|---|---|---|---|---|---|---|---|---|---|
| Comparative Example 3 | $0.9Li\text{-}Ni_{0.4}Mn_{0.45}Co_{0.05}Nb_{0.1}O_2 \cdot 0.1Li_2MnO_3$ | 0.36 | Manganese nitrate 0.505 | Cobalt nitrate 0.045 | 1.1 | 0.045 | 0.1 | 0.4 | 0.45 | 0.1 |
| Comparative Example 4 | $0.9Li\text{-}Ni_{0.6}Mn_{0.15}Co_{0.05}Nb_{0.2}O_2 \cdot 0.1Li_2MnO_3$ | 0.54 | Manganese nitrate 0.235 | Cobalt nitrate 0.045 | 1.1 | 0.09 | 0.1 | 0.6 | 0.15 | 0.2 |
| Comparative Example 5 | $0.9LiNi_{0.3}Mn_{0.4}Nb_{0.1}O_2 \cdot 0.1Li_2MnO_3$ | 0.45 | Manganese nitrate 0.46 | 0 | 1.1 | 0.045 | 0.1 | 0.5 | 0.4 | 0.1 |

Table 2: parameter results in Examples 1-20 and Comparative Examples 1-5

| | | Positive electrode active material | a | x | y | z | x/z | Primary particle size ($\mu$m) |
|---|---|---|---|---|---|---|---|---|
| | Example 1 | $0.9LiNi_{0.7}Mn_{0.15}Co_{0.05}Nb_{0.1}O_2 \cdot 0.1Li_2MnO_3$ | 0.1 | 0.7 | 0.15 | 0.1 | 7 | 0.4 |
| | Example 2 | $0.8LiNi_{0.7}Mn_{0.15}Co_{0.05}Nb_{0.1}O_2 \cdot 0.2Li_2MnO_3$ | 0.2 | 0.7 | 0.15 | 0.1 | 7 | 0.4 |
| | Example 3 | $0.5LiNi_{0.7}Mn_{0.15}Co_{0.05}Nb_{0.1}O_2 \cdot 0.5Li_2MnO_3$ | 0.5 | 0.7 | 0.15 | 0.1 | 7 | 0.4 |
| | Example 4 | $0.95LiNi_{0.7}Mn_{0.15}Co_{0.05}Nb_{0.1}O_2 \cdot 0.05Li_2MnO_3$ | 0.05 | 0.7 | 0.15 | 0.1 | 7 | 0.4 |
| | Example 5 | $0.4LiNi_{0.7}Mn_{0.15}Co_{0.05}Nb_{0.1}O_2 \cdot 0.6Li_2MnO_3$ | 0.6 | 0.7 | 0.15 | 0.1 | 7 | 0.4 |
| | Example 6 | $0.9LiNi_{0.8}Mn_{0.05}Co_{0.05}Nb_{0.1}O_2 \cdot 0.1Li_2MnO_3$ | 0.1 | 0.8 | 0.05 | 0.1 | 8 | 0.4 |
| | Example 7 | $0.9LiNi_{0.6}Mn_{0.25}Co_{0.05}Nb_{0.1}O_2 \cdot 0.1Li_2MnO_3$ | 0.1 | 0.6 | 0.25 | 0.1 | 6 | 0.4 |
| | Example 8 | $0.9LiNi_{0.85}Co_{0.05}Nb_{0.1}O_2 \cdot 0.1Li_2MnO_3$ | 0.1 | 0.85 | 0 | 0.1 | 8.5 | 0.4 |
| | Example 9 | $0.9LiNi_{0.7}Mn_{0.13}Co_{0.05}Nb_{0.12}O_2 \cdot 0.1Li_2MnO_3$ | 0.1 | 0.7 | 0.13 | 0.12 | 5.8 | 0.3 |
| | Example 10 | $0.9LiNi_{0.7}Mn_{0.1}Co_{0.05}Nb_{0.15}O_2 \cdot 0.1Li_2MnO_3$ | 0.1 | 0.7 | 0.1 | 0.15 | 4.7 | 0.2 |
| | Example 11 | $0.9LiNi_{0.7}Mn_{0.2}Co_{0.05}Nb_{0.05}O_2 \cdot 0.1Li_2MnO_3$ | 0.1 | 0.7 | 0.2 | 0.05 | 14 | 0.5 |
| | Example 12 | $0.9LiNi_{0.65}Mn_{0.18}Co_{0.02}Nb_{0.15}O_2 \cdot 0.1Li_2MnO_3$ | 0.1 | 0.65 | 0.18 | 0.15 | 4.3 | 0.2 |
| | Example 13 | $0.9LiNi_{0.73}Mn_{0.15}Co_{0.05}Nb_{0.07}O_2 \cdot 0.1Li_2MnO_3$ | 0.1 | 0.73 | 0.15 | 0.07 | 10 | 0.5 |
| | Example 14 | $0.9LiNi_{0.6}Mn_{0.15}Co_{0.1}Nb_{0.15}O_2 \cdot 0.1Li_2MnO_3$ | 0.1 | 0.6 | 0.15 | 0.15 | 4 | 0.2 |
| | Example 15 | The chemical formula is the same as that in Example 13. | 0.1 | 0.73 | 0.15 | 0.07 | 10 | 0.9 |
| | Example 16 | The chemical formula is the same as that in Example 11. | 0.1 | 0.7 | 0.2 | 0.05 | 14 | 1.5 |
| | Example 17 | $0.9LiNi_{0.7}Al_{0.15}Co_{0.05}Nb_{0.1}O_2 \cdot 0.1Li_2MnO_3$ | 0.1 | 0.7 | 0.15 | 0.1 | 7 | 0.4 |
| | Example 18 | $0.9LiNi_{0.7}Mn_{0.19}Mo_{0.01}Nb_{0.1}O_2 \cdot 0.1Li_2MnO_3$ | 0.1 | 0.7 | 0.19 | 0.1 | 7 | 0.5 |
| | Example 19 | $0.9LiNi_{0.6}Mn_{0.25}Co_{0.05}Nb_{0.1}O_2 \cdot 0.1Li_2MnO_3$ | 0.1 | 0.6 | 0.25 | 0.1 | 6 | 0.5 |
| | Example 20 | $0.9LiNi_{0.7}Mn_{0.15}Zr_{0.05}Nb_{0.1}O_2 \cdot 0.1Li_2MnO_3$ | 0.1 | 0.7 | 0.15 | 0.1 | 7 | 0.4 |
| | Comparative Example 1 | $0.9LiNi_{0.7}Mn_{0.25}Co_{0.05}O_2 \cdot 0.1Li_2MnO_3$ | 0.1 | 0.7 | 0.25 | 0 | / | 1.5 |
| | Comparative Example 2 | $LiNi_{0.7}Mn_{0.15}Co_{0.05}Nb_{0.1}O_2$ | 0 | 0.7 | 0.15 | 0.1 | 7 | 0.5 |
| | Comparative Example 3 | $0.9LiNi_{0.4}Mn_{0.45}Co_{0.05}Nb_{0.1}O_2 \cdot 0.1Li_2MnO_3$ | 0.1 | 0.4 | 0.45 | 0.1 | 4 | 0.5 |
| | Comparative Example 4 | $0.9LiNi_{0.6}Mn_{0.15}Co_{0.05}Nb_{0.2}O_2 \cdot 0.1Li_2MnO_3$ | 0.1 | 0.6 | 0.15 | 0.2 | 3 | 0.4 |
| | Comparative Example 5 | $0.9LiNi_{0.5}Mn_{0.4}Nb_{0.1}O_2 \cdot 0.1Li_2MnO_3$ | 0.1 | 0.5 | 0.4 | 0.1 | 5 | 0.4 |

**Test Example**

(1) Test of primary particle size: a Sigma 300 scanning electron microscope was used to test according to the method in JY/T010-1996.

(2) Test of battery capacity at 0.5C: at room temperature, the battery was tested on a Neware battery testing system. It was charged and discharged three times at a constant current density of 0.5C, with a voltage range of 2.5-4.8V. The discharge capacity at the third time was taken as the battery capacity at 0.5C.

(3) Test of battery capacity after 100 cycles at 0.5C: the battery was charged and discharged cyclically according to the method in (3) above until 100 cycles, and the discharge capacity at the 100th cycle was taken as the battery capacity after 100 cycles at 0.5C.

(4) Test of cycling performance: based on the results of (3) and (4), the capacity retention rate after 100 cycles at 0.5C was calculated according to the following formula:

$$Cycle\ capacity\ retention\ rate = 100\% * \frac{Battery\ capacity\ after\ 100\ cycles\ at\ 0.5C}{Battery\ capacity\ at\ 0.5C}$$

The results of (1) were as shown in Table 2, and the results of (2) to (4) were as shown in Table 3 and Table 4.

Table 3: test results of battery capacity after 100 cycles at 0.5C in Examples 1-20 and Comparative Examples 1-5

|  | Battery capacity after 100 cycles at 0.5C (mAh) |
|---|---|
| Example 1 | 245.7 |
| Example 2 | 257.0 |
| Example 3 | 263.3 |
| Example 4 | 223.1 |
| Example 5 | 223.4 |
| Example 6 | 251.4 |
| Example 7 | 241.0 |
| Example 8 | 252.3 |
| Example 9 | 233.2 |
| Example 10 | 228.8 |
| Example 11 | 228.9 |
| Example 12 | 238.1 |
| Example 13 | 226.8 |
| Example 14 | 236.3 |
| Example 15 | 227.8 |
| Example 16 | 221.0 |
| Example 17 | 243.9 |
| Example 18 | 238.4 |
| Example 19 | 220.0 |
| Example 20 | 240.3 |
| Comparative Example 1 | 187.5 |
| Comparative Example 2 | 176.8 |
| Comparative Example 3 | 199.2 |
| Comparative Example 4 | 216.9 |
| Comparative Example 5 | 219.2 |

According to Table 3, compared with Comparative Examples 1-5, the capacity of the batteries prepared in examples of this application after 100 cycles at 0.5C is significantly higher.

Table 4: test results of cycle capacity retention rate, battery capacity at 0.5C, and battery capacity after 100 cycles at 0.5C in Examples 1-20

|  | Cycle capacity retention rate after 100 cycles at 0.5C | Battery capacity at 0.5C (mAh) | Battery capacity after 100 cycles at 0.5C (mAh) |
|---|---|---|---|
| Example 1 | 90% | 273.0 | 245.7 |
| Example 2 | 89% | 288.8 | 257.0 |
| Example 3 | 88% | 299.3 | 263.3 |
| Example 4 | 85% | 262.5 | 223.1 |
| Example 5 | 76% | 294.0 | 223.4 |
| Example 6 | 90% | 279.3 | 251.4 |
| Example 7 | 90% | 267.8 | 241.0 |
| Example 8 | 89% | 283.5 | 252.3 |
| Example 9 | 88% | 265.0 | 233.2 |
| Example 10 | 87% | 263.0 | 228.8 |
| Example 11 | 88% | 260.1 | 228.9 |
| Example 12 | 90% | 264.6 | 238.1 |
| Example 13 | 84% | 270.0 | 226.8 |
| Example 14 | 90% | 262.5 | 236.3 |
| Example 15 | 85% | 268.0 | 227.8 |
| Example 16 | 85% | 260.0 | 221.0 |
| Example 17 | 89% | 274.1 | 243.9 |
| Example 18 | 88% | 270.9 | 238.4 |
| Example 19 | 88% | 250.0 | 220.0 |
| Example 20 | 89% | 270.0 | 240.3 |

From Table 4, it can be seen that

compared with Example 4, Examples 1-3, 6, and 8 of this application have significantly improved cycle capacity retention rate, significantly improved battery capacity at 0.5C, and significantly improved battery capacity after 100 cycles at 0.5C; compared with Example 5, Examples 1-3, 6, and 8 of this application have significantly improved cycle capacity retention rate, and significantly improved battery capacity after 100 cycles at 0.5C;

compared with Examples 7, 12, 14, and 19, Examples 1-3, 6, and 8 of this application have significantly improved battery capacity at 0.5C, and significantly improved battery capacity after 100 cycles at 0.5C;

compared with Examples 13, 15, and 16, Examples 1-3, 6, and 8 of this application have significantly improved cycle capacity retention rate, significantly improved battery capacity at 0.5C, and significantly improved battery capacity after 100 cycles at 0.5C; compared with Example 11, Examples 1-3, 6, and 8 of this application have significantly improved batter capacity at 0.5C, and significantly improved battery capacity after 100 cycles at 0.5C;

compared with Example 10, Examples 1-3, 6, and 8 of this application have significantly improved cycle capacity retention rate, significantly improved battery capacity at 0.5C, and significantly improved battery capacity after 100 cycles at 0.5C; compared with Example 9, Examples 1-3, 6, and 8 of this application have significantly improved battery capacity at 0.5C, and significantly improved battery capacity after 100 cycles at 0.5C.

It should be noted that this application is not limited to the above examples. The above implementations are only exemplary. Any implementations within the scope of the technical solution of this application that have essentially the same composition as the technical idea and exert the same effect are included in the technical scope of this application. In addition, within the scope of the essence of this application, various modifications that can be conceived by those skilled in the art to the implementations, and other implementations obtained by combining some of the constituent elements of the implementations are also included within the scope of this application.

**Claims**

1. A positive electrode active material, comprising $(1-a)LiNi_xM1_yM2_{(1-x-y-z)}Nb_zO_2 \cdot aLi_2MnO_3$, wherein

   M1 comprises one or more elements of Mn and Al;
   M2 comprises one or more transition metal elements except Mn, Ni, and Nb;

   $$0<a<1; 0.6 \leq x<1, \; 0 \leq y<0.4, \; 0<z \leq 0.15, \; \text{and} \; 0.6 < x+y+z \leq 1.$$

2. The positive electrode active material according to claim 1, wherein $4<x/z<14$, optionally $6 \leq x/z \leq 10$.

3. The positive electrode active material according to claim 1 or 2, wherein $0.7 \leq x \leq 0.85$.

4. The positive electrode active material according to any one of claims 1 to 3, wherein $0.05 \leq z \leq 0.15$, optionally $0.1 \leq z \leq 0.15$.

5. The positive electrode active material according to any one of claims 1 to 4, wherein $0.05 \leq a \leq 0.6$, optionally $0.1 \leq a \leq 0.5$.

6. The positive electrode active material according to any one of claims 1 to 5, wherein M2 comprises one or more of Co, Mo, and Zr; optionally, M2 comprises Co.

7. The positive electrode active material according to any one of claims 1 to 6, wherein the positive electrode active material comprises a polycrystalline material, and the particle size of primary particles of the polycrystalline material is greater than or equal to $0.1 \mu m$ and less than or equal to $1.5 \mu m$, optionally greater than $0.3 \mu m$ and less than or equal to $1.5 \mu m$, more optionally greater than or equal to $0.4 \mu m$ and less than or equal to $1 \mu m$.

8. The positive electrode active material according to any one of claims 1 to 7, wherein the volume average particle size Dv50 of the positive electrode active material is $1-10 \mu m$; and/or

   the specific surface area of the positive electrode active material is $0.2-2 m^2/g$; and/or
   the tap density of the positive electrode active material is $1.5-2.5 g/cm^3$.

9. A method for preparing a positive electrode active material, comprising:

   providing a solution containing a nickel source, the solution optionally further containing a source of M1 and/or a source of M2;
   enabling the solution to react with an alkaline solution to obtain a precipitate; and
   mixing the precipitate with a lithium source and a niobium source, and performing calcination to obtain a positive electrode active material,
   wherein the positive electrode active material comprises $(1-a)LiNi_xM1_yM2_{(1-x-y-z)}Nb_zO_2 \cdot aLi_2MnO_3$, wherein M1, M2, a, x, y, and z are as defined in any one of claims 1 to 8.

10. The method according to claim 9, wherein the molar ratio of nickel in the solution to niobium in the niobium source is 4-14, optionally 6-10.

11. The method according to claim 9 or 10, wherein the content of nickel in the solution is 0.1-1mol/L, optionally 0.2-0.8mol/L; and/or

    the content of M1 in the solution is 0-0.9mol/L, optionally 0-0.7mol/L; and/or
    the content of M2 in the solution is 0-0.3mol/L, optionally 0-0.1mol/L.

12. The method according to any one of claims 9 to 11, wherein the molar ratio of lithium in the lithium source to niobium in the niobium source is 7-32, optionally 10-22.

13. The method according to any one of claims 9 to 12, wherein the alkaline solution comprises sodium hydroxide and/or $NH_3 \cdot H_2O$; and/or

    the calcination temperature is 700°C-800°C; and/or
    the calcination time is 4-15h.

14. A positive electrode plate, comprising the positive electrode active material according to any one of claims 1 to 8 or the positive electrode active material prepared by adopting the method according to any one of claims 9 to 13.

15. A battery, comprising the positive electrode active material according to any one of claims 1 to 8, the positive electrode active material prepared by adopting the method according to any one of claims 9 to 13, or the positive electrode plate according to claim 14.

16. An electric device, comprising the battery according to claim 15.

FIG. 1

FIG. 2

FIG. 3

FIG. 4

FIG. 5

FIG. 6

## INTERNATIONAL SEARCH REPORT

International application No.

**PCT/CN2023/081646**

### A. CLASSIFICATION OF SUBJECT MATTER

H01M4/525(2010.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 正极, 阴极, Nb, 铌, Mn, Ni, 富锂, 破碎, 掺杂, 循环, 体积, positive, electrode, cathode, niobium, Nickel, Manganese, lithium, rich, crush+, dop+, cycli+

### C. DOCUMENTS CONSIDERED TO BE RELEVANT

| Category* | Citation of document, with indication, where appropriate, of the relevant passages | Relevant to claim No. |
|---|---|---|
| X | JP 2015130272 A (HITACHI METALS, LTD.) 16 July 2015 (2015-07-16) description, paragraphs 7-76 | 1-16 |
| X | JP 2016039117 A (HITACHI METALS, LTD.) 22 March 2016 (2016-03-22) description, paragraphs 8-86 | 1-16 |
| X | JP 2016051504 A (HITACHI METALS, LTD.) 11 April 2016 (2016-04-11) description, paragraphs 19-92 | 1-16 |
| A | CN 104882587 A (PANASONIC CORP.) 02 September 2015 (2015-09-02) entire document | 1-16 |
| A | CN 109244444 A (XIANGTAN UNIVERSITY) 18 January 2019 (2019-01-18) entire document | 1-16 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 September 2023** | **24 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/081646** |

| Patent document cited in search report | | | Publication date (day/month/year) | Patent family member(s) | | | Publication date (day/month/year) |
| --- | --- | --- | --- | --- | --- | --- | --- |
| JP | 2015130272 | A | 16 July 2015 | None | | | |
| JP | 2016039117 | A | 22 March 2016 | None | | | |
| JP | 2016051504 | A | 11 April 2016 | None | | | |
| CN | 104882587 | A | 02 September 2015 | US | 2015243966 | A1 | 27 August 2015 |
| | | | | JP | 2015179662 | A | 08 October 2015 |
| | | | | JP | 6469450 | B2 | 13 February 2019 |
| CN | 109244444 | A | 18 January 2019 | None | | | |

Form PCT/ISA/210 (patent family annex) (July 2022)